# EUROPÄISCHE PATENTSCHRIFT

(11) **EP 3 308 074 B1**
(45) Veröffentlichungstag und Bekanntmachung des Hinweises auf die Patenterteilung: **20.03.2019**
(21) Anmeldenummer: 16732917.6
(22) Anmeldetag: 06.06.2016
(51) Int. Cl.: F21S 41/36, F21S 41/63, F21S 41/663, F21S 41/675, F21S 41/683, F21S 41/692, F21S 41/16, G02B 26/08, B60Q 1/14, F21S 41/14, F21S 41/141, F21S 41/365

(54) **SCHEINWERFER FÜR FAHRZEUGE**
HEADLIGHT FOR VEHICLES
PHARE DE VÉHICULES

(30) Priorität: 09.06.2015 AT 504702015
(43) Veröffentlichungstag der Anmeldung: 18.04.2018
(73) Patentinhaber: ZKW Group GmbH, 3250 Wieselburg (AT)
(72) Erfinder: REINPRECHT, Markus, 3384 Pielachhäuser (AT); RIESENHUBER, Michael, 3254 Bergland (AT)
(74) Vertreter: Patentanwaltskanzlei Matschnig & Forsthuber OG
(86) Internationale Anmeldenummer: PCT/AT2016/050177
(87) Internationale Veröffentlichungsnummer: WO 2016/197167

(56) Entgegenhaltungen:
- EP-A2- 1 433 655
- DE-A1-102008 036 193
- DE-A1-102010 048 659
- DE-A1-102014 213 179

## Beschreibung

Die Erfindung bezieht sich auf einen Scheinwerfer für Fahrzeuge, mit zumindest einer Lichtquelle samt einer Fokussieroptik, mit einem Mikrospiegelarray und mit einer Abbildungsoptik, wobei der Lichtquelle und dem Mikrospiegelarray eine zentrale Recheneinheit mit einer Lichtquellen-Ansteuerung und einer Arrayansteuerung zugeordnet ist, die zentrale Recheneinheit mit der Arrayansteuerung dazu eingerichtet ist, die Stellung der Mikrospiegel periodisch mit einer vorgegebenen Ansteuerfrequenz und einem vorgegebenen Duty Cycle zwischen einem AUS-Zustand und einem EIN-Zustand umzuschalten und der geformte Lichtstrahl der zumindest einen Lichtquelle auf das Mikrospiegelarray gerichtet ist und das von diesem strukturierte, reflektierte Lichtbündel über die Abbildungsoptik als Lichtbild auf die die Straße projiziert wird, wobei die Recheneinheit mit der Lichtquellen-Ansteuerung und der Arrayansteuerung dazu eingerichtet ist, den fokussierten, auf das Mikrospiegelarray gerichteten Lichtstrahl synchronisiert mit der Ansteuerfrequenz des Mikrospiegelarrays zu vorgebbaren Zeiten zu unterdrücken und zum Erzeugen eines ausgeblendeten Bereichs des Lichtbilds im Falle eines Ausblendszenarios in einem Bereich des Mikrospiegelarrays die Mikrospiegel in ihrer periodischen Schaltphase um 180° vom AUS-Zustand auf den EIN-Zustand zu verschieben sowie den fokussierten, auf das Mikrospiegelarray gerichteten Lichtstrahl synchronisiert mit der Ansteuerfrequenz des Mikrospiegelarrays zu jenen Zeiten zu unterdrücken, zu welchen die Mikrospiegel auf den EIN-Zustand verschoben wurden.

Bei der Entwicklung der gegenwärtigen Scheinwerfersysteme steht immer mehr der Wunsch im Vordergrund, ein möglichst hochauflösendes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell entspricht das Lichtbild im hier verwendeten Sinn einer Projektion auf eine vertikale Fläche entsprechend der einschlägigen Normen, die sich auf die KFZ-Beleuchtungstechnik beziehen.

Entsprechend dem genannten Bedürfnis sind unterschiedliche Scheinwerfersysteme entwickelt worden, von welchen stellvertretend folgende genannt werden.

Systeme welche das Licht einer großen Anzahl von LEDs über Projektionssysteme mit Einzellinsen als Lichtbild auf die Fahrbahn projizieren, wobei die Helligkeit der einzelnen LEDs, die von einer zentralen Recheneinheit ausgehend angesteuert werden, individuell eingestellt bzw. geändert werden kann. Siehe beispielsweise die Pixellite™-Scheinwerfersysteme der Anmelderin, beschrieben u.a. in AT 513.738 B1.

Andere Scheinwerfersysteme arbeiten mit scannenden, modulierten Laserstrahlen, wobei lichttechnischer Ausgangspunkt zumindest eine Laserlichtquelle ist, die einen Laserstrahl abgibt, und welcher eine Laseransteuerung zugeordnet ist, die zur Stromversorgung sowie zur Überwachung der Laseremission oder z.B. zur Temperaturkontrolle dient und auch zum Modulieren der Intensität des abgestrahlten Laserstrahls eingerichtet ist. Unter "Modulieren" ist dabei zu verstehen, dass die Intensität der Laserlichtquelle geändert werden kann, sei es kontinuierlich oder im Sinne eines Ein- und Ausschaltens gepulst. Wesentlich ist, dass die Lichtleistung analog dynamisch geändert werden kann, je nachdem, an welcher Winkelposition ein den Laserstrahl ablenkender Spiegel steht. Zusätzlich gibt es noch die Möglichkeit des Ein- und Ausschaltens für eine gewisse Zeit, um definierte Stellen nicht zu beleuchten oder auszublenden. Ein Beispiel eines dynamischen Ansteuerungskonzepts zur Erzeugung eines Bildes durch einen scannenden Laserstrahl ist etwa in dem Dokument AT 514633 der Anmelderin beschrieben.

Die genannten Scheinwerfersysteme sind zum Teil sehr aufwändig und teuer, sodass der Wunsch besteht, ökonomische Scheinwerfer zu schaffen, welche dennoch eine hohe Flexibilität hinsichtlich des erzeugten Lichtbilds aufweisen. In diesem Sinn ist es bekannt geworden, als Lichtbearbeitungselemente Bildgeber zu verwenden, die eine große Anzahl ansteuerbarer Pixelfelder aufweisen. So zeigt die DE 10 2013 215 374 A1 Lösungen, bei welchen das Licht einer Lichtquelle über einen sogenannten "Taper", einem konischen Lichtleitelement, zu einem LCD-Bildgeber, zu einem LCoS-Chip oder zu einer Mikrospiegelanordnung ("DMD") gelenkt wird, um dann über eine Projektionsoptik auf die Fahrbahn projiziert zu werden.

DMD ist ein Akronym, das für "Digital Micromirror Device" gebraucht wird, somit für ein Mikrospiegel-Array oder Mikrospiegel-Matrix. Solch ein Mikrospiegel-Array besitzt sehr kleine Abmessungen, typischerweise in der Größenordnung von 10 mm.

Bei einem DMD sind Mikrospiegelaktoren matrixartig angeordnet, wobei jedes einzelne Spiegelelement um einen bestimmten Winkel, beispielsweise 20°, verkippbar ist, beispielsweise durch elektromagnetische oder piezoelektrische Aktoren. Die Endlagen eines Mikrospiegels wird in dieser Beschreibung als EIN-Zustand bzw. AUS-Zustand bezeichnet, wobei EIN-Zustand bedeutet, dass Licht von dem Mikrospiegel über die Abbildungsoptik auf die Straße gelangt, wogegen es im AUS-Zustand beispielsweise auf einen Absorber gelenkt wird. Ein Scheinwerfer auf Basis eines Mikrospiegel-Arrays ist beispielsweise in der DE 195 30 008 A1 beschrieben.

Die Erfindung geht von einem Scheinwerfer der eingangs zitierten Art aus, der somit ein DMD verwendet.

Die DE 10 2010 048 659 A1 zeigt gleichfalls einen Fahrzeugscheinwerfer, bei dem eine Lichtquelle Licht auf eine Mikrospiegel-Anordnung wirft, deren Mikrospiegel in zumindest zwei Stellungen bewegbar sind. Eine Steuereinrichtung steuert die Mikrospiegel-Anordnung so an, dass das Licht der Mikrospiegel je auf eine von zwei Linsen gelenkt wird, um auf diese Weise auf der Straße zwei unterschiedliche Lichtverteilungen zu erzeugen. Wahlweise kann in einer dritten Stellung der Mikrospiegel das Licht auch auf einen Absorber gelenkt werden. Die Steuereinrichtung kann außerdem ein Signal zum Dimmen an die Lichtquelle abgeben.

Ein Problem, das bei DMDs im Zusammenhang mit gepulsten Lasern hoher Spitzenleistung auftritt, ist allerdings die Erwärmung der einzelnen Mikrospiegel oder Spiegelplatten, da DMDs üblicherweise bis etwa 85°C spezifiziert sind und die Oberfläche der Spiegelplatten, welche die einzelnen Pixel repräsentieren im Allgemeinen unter einer kritischen Temperatur von 150°C gehalten werden sollte. Höhere Temperaturen führen generell zu einer Verminderung der Lebensdauer, insbesondere auch auf Grund des Memory-Effekts der elastischen Spiegelaufhängungen, der bei höheren Temperaturen rascher auftritt als bei niedrigen Temperaturen. Der angewendete Duty Cycle, nämlich das Tastverhältnis zwischen einem EIN-Zustand und einem AUS-Zustand der einzelnen Mikrospiegel, spielt natürlich gleichfalls eine Rolle. Um dies zu veranschaulichen sei als Beispiel für einen ausgewählten DMD-Typ angegeben, dass bei einem Duty Cycle von 80% (100%) und einer Temperatur des DMD von 55°C die Lebensdauer über 8000 h (6200 h) liegt bei 70° C nur noch bei 2600 h (1500 h) und bei 90°C bei 450 h (270 h), wobei sich die Klammerwerte auf einen Duty Cycle von 100 % beziehen.

Bei dem ausgewählten DMD beträgt die Lebensdauer bei 50°C und einem Duty Cycle von 100% > 8000 Stunden sodass in diesem Betriebszustand der Spiegel immer in der vom Anwender gewünschten Position stehen bleiben könnte, ohne Lebensdauereinschränkungen hinnehmen zu müssen. Die Lebensdauer bei 90°C und 100% Duty Cycle beträgt andererseits nur noch 270 Stunden, was für praktische Anwendungen nicht mehr hinnehmbar ist. Um in dem zweitgenannten Betriebszustand (90°C und 100%) eine Lebensdauer von 8000 Stunden zu erreichen, muss der Duty Cycle auf 50% reduziert werden. Dies bedeutet, dass jeder Mikrospiegel zu 50% der Zeit in Position +10° und 50% in -10° stehen muss, um die Lebensdauer zu erreichen (Hier wurde ein Verschwenken des Spiegels zwischen den Endlagen um insgesamt 20° angenommen).

Dies bedeutet, auf einen gegenständlichen Scheinwerfer angewandt, dass 50% des erzeugten Lichtes bei hohen Temperaturen zu einem Absorber umgelenkt werden müssen und nicht auf die Straße gelangen können, was die Effizienz des Gesamtsystems verständlicherweise deutlich verringert.

Ein weiteres erhebliches Problem liegt bei einem gegenständlichen Scheinwerfer in Ausblendszenarien, d.h. Situationen, in welchen beispielsweise ein entgegenkommendes Fahrzeug ausgeblendet werden soll, da jene Bereiche, welche dunkel sein sollten, noch mit 50% der maximalen Beleuchtungsstärke getroffen werden. Auch diese 50% würden zu einer deutlichen Blendung des Gegenverkehrs führen. Geht man beispielweise von einer von dem Scheinwerfersystem erzeugten, maximalen Beleuchtungsstärke von 100 lx aus, so würde der ausgeblendete Verkehr mit 50 lx beleuchtet werden, doch liegt der übliche gesetzliche Grenzwert für ein Ausblendszenario bei 1 lx. Der Gegenverkehr würde somit nicht als ausgeblendet gelten und das System wäre nicht gesetzeskonform.

Es ist eine Aufgabe der Erfindung, einen Scheinwerfer zu schaffen, bei welchem die genannten Nachteile vermieden oder zumindest stark verringert sind, wobei insbesondere ein Ausblendszenario auch bei einem Duty Cycle von z.B. 50% ermöglicht werden soll.

Diese Aufgabe wird mit einem Scheinwerfer der eingangs genannten Art gelöst, bei welchem erfindungsgemäß die Recheneinheit mit der Lichtquellen-Ansteuerung und der Arrayansteuerung dazu eingerichtet ist, den fokussierten, auf das Mikrospiegelarray gerichteten Lichtstrahl synchronisiert mit der Ansteuerfrequenz des Mikrospiegelarrays zu vorgebbaren Zeiten zu unterdrücken und zum Erzeugen eines ausgeblendeten Bereichs des Lichtbilds im Falle eines Ausblendszenarios in einem Bereich des Mikrospiegelarrays die Mikrospiegel in ihrer periodischen Schaltphase um 180° vom AUS-Zustand auf den EIN-Zustand zu verschieben sowie den fokussierten, auf das Mikrospiegelarray gerichteten Lichtstrahl synchronisiert mit der Ansteuerfrequenz des Mikrospiegelarrays zu jenen Zeiten zu unterdrücken, zu welchen die Mikrospiegel auf den EIN-Zustand verschoben wurden.

Die Lösung nach der Erfindung bietet den Vorteil, dass besondere Betriebszustände gesteuert werden können, ohne dass der Duty Cycle des Mikrospiegelarrays geändert werden muss. Dadurch kann man die thermische Belastung des DMD-Chips in Grenzen halten, was sich günstig auf dessen Lebensdauer auswirkt.

Im Sinne einer nicht zu aufwändigen Gestaltung der Ansteuerung kann es zweckmäßig sein, wenn die Recheneinheit mit der Lichtquellen-Ansteuerung und der Arrayansteuerung dazu eingerichtet ist, den auf das Array gerichteten Lichtstrahl synchronisiert mit der Ansteuerfrequenz der Mikrospiegel während der AUS-Phasen zu unterdrücken.

Gemäß einer anderen sehr vorteilhaften Weiterbildung der Erfindung ist vorgesehen, dass zum gezielten Beleuchten eines Bereichs der Fahrbahn/des Lichtbilds, die Recheneinheit mit der Lichtquellen-Ansteuerung und der Arrayansteuerung dazu eingerichtet ist, während des EIN-Zustandes aller Mikrospiegel, die für alle Bereiche außerhalb des gezielt zu beleuchtenden Bereichs verantwortlich sind, den auf das Array gerichteten Lichtstrahl synchronisiert mit der Ansteuerfrequenz der Mikrospiegel während der AUS-Zustände zu unterdrücken.

Bei einer weiteren Variante ist vorgesehen, dass zum Erzeugen eines strukturierten Lichtbilds mit unterschiedlichen Beleuchtungsstärken die Recheneinheit (4) mit der Lichtquellen-Ansteuerung (3) und der Arrayansteuerung (12) dazu eingerichtet ist, die EIN-Zustände von Mikrospiegeln um bestimmte Zeiten tl...t4 in der Phase zu verschieben und den auf das Array gerichteten Lichtstrahl synchronisiert mit der Ansteuerfrequenz der Mikrospiegel der AUS-Zustände zu unterdrücken, wobei je nach Phasenverschiebung zumindest ein zeitlicher Teilbereich der EIN-Zustände in den Unterdrückungszeitraum fällt. Auf diese Weise lässt sich ein Lichtbild erzeugen, dass bestimmten Vorgaben entsprechend strukturiert ist, wobei auch hier das Vermeiden einer zu hohen, die Lebensdauer eines Mikrospiegelarrays verkürzenden Erwärmung im Vordergrund steht.

Eine praxisgerechte Ausführung sieht vor, dass im Strahlengang zwischen der Lichtquelle und dem Mikrospiegelarray ein verschwenkbarer Spiegel vorgesehen ist, der einen Antrieb besitzt, welcher je nach Aktivierung durch ein von der Recheneinheit geliefertes mit dem Umschaltverhalten des Mikrospiegelarrays synchronisiertes, Signal so bewegt werden kann, dass er je nach Aktivierung den Lichtstrahl der Lichtquelle zu dem Mikrospiegelarray lenkt oder von diesem weg, bevorzugt zu einem Absorber.

Gemäß einer anderen zweckmäßigen Variante kann vorgesehen sein, dass im den Strahlengang zwischen Lichtquelle und Mikrospiegelarray eine bewegliche, von einem Antrieb bewegbare Blende geschaltet ist, die je nach Aktivierung durch ein mit dem Umschaltverhalten des Mikrospiegelarrays synchronisiertes Signal der Recheneinheit den Strahlengang zu dem Mikrospiegelarray freigibt oder blockiert.

Gemäß wiederum einer anderen praxisbewährten Variante ist die bewegliche Blende als rotierende Blende ausgebildet, welche von einem Motor angetrieben ist, der von einem von der Recheneinheit gelieferten, mit dem Umschaltverhalten des Mikrospiegelarrays synchronisierten Signal gesteuert ist.

Anstelle und der im Prinzip mechanischen Unterdrückung kann, gegebenenfalls auch zusätzlich, vorgesehen sein, dass zum zeitweisen und synchronisierten Unterdrücken des auf das Mikrospiegelarray gerichteten Lichtstrahls ein von der Recheneinheit gesteuertes und mit dem Umschaltverhalten des Mikrospiegelarrays synchronisiertes EIN/AUS-Schalten der Lichtquelle vorgesehen ist. Durch das periodische Abschalten der Lichtquelle kann man verständlicherweise die Wärmeverluste bzw. ein unerwünschtes Erwärmen erheblich verringern.

Die Erfindung samt weiteren Vorteilen ist im Folgenden an Hand beispielsweiser Ausführungsformen näher erläutert, die in der Zeichnung veranschaulicht sind. In dieser zeigt
Fig. 1 die für die Erfindung wesentlichen Komponenten eines Scheinwerfers mit einem Mikrospiegelarray, im Wesentlichen dem Stand der Technik entsprechend,
Fig. 2 eine erste Ausführungsform der Erfindung in einer Darstellung entsprechend Fig. 1 mit Hervorhebung der für die erfindungsgemäße Funktion wichtigen Komponenten,
Fig. 3 eine zweite Ausführungsform der Erfindung in einer Darstellung entsprechend Fig. 2,
Fig. 4 eine dritte Ausführungsform der Erfindung in einer Darstellung entsprechend Fig. 2,
Fig. 5 eine vierte Ausführungsform der Erfindung in einer Darstellung entsprechend Fig. 2,
Fig. 6 zu acht Einzelzeitpunkten die Stellung der Mikrospiegel eines stark vereinfachten Mikrospiegelarrays,
Fig. 7 in einem Zeitdiagramm das phasenverschobene Umschalten von Mikrospiegeln,
Fig. 8 ein stark vereinfachtes Lichtbild einer möglichen Fernlichtverteilung,
Fig. 9 eine Tabelle mit Zahlenwerten zu dem Lichtbild nach Fig. 8,
Fig. 10 in fünf Diagrammen Schaltzustände der Mikrospiegel des Arrays für die in den Fig. 8 bzw. 9 angegebenen Beleuchtungsstärken,
Fig. 11 in einer Darstellung ähnlich der Fig. 6 die Stellung der Mikrospiegel um das in Fig. 8 und Fig. 9 gezeigte Lichtbild zu erreichen und
Fig. 12 in einem Diagramm das pulsweitenmodulierte Ansteuern von Mikrospiegeln des Arrays.

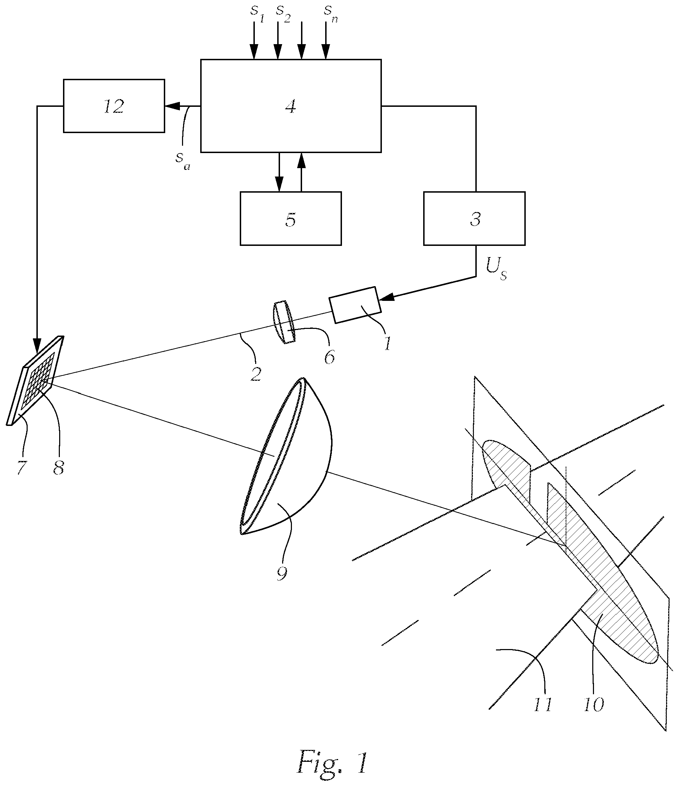

Unter Bezugnahme auf **Fig. 1** wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers ist eine Lichtquelle 1, die einen Lichtstrahl 2 abgibt, und welcher eine Ansteuerung 3 zugeordnet ist, wobei diese Ansteuerung 3 zur Stromversorgung der Lichtquelle 1 sowie zur deren Überwachung oder z.B. zur Temperaturkontrolle dient und auch zum Modulieren der Intensität des abgestrahlten Lichtstrahls eingerichtet sein kann. Unter "Modulieren" wird in Zusammenhang mit der vorliegenden Erfindung verstanden, dass die Intensität der Lichtquelle geändert werden kann, sei es kontinuierlich oder gepulst, im Sinne eines Ein- und Ausschaltens. Zusätzlich gibt es noch die Möglichkeit des Ein- und Ausschaltens für eine gewisse Zeit. Dabei werden in bevorzugter Weise LED-Lichtquellen verwendet, welche mit hohen Strömen betrieben werden können - man spricht von "High Power LEDs" - , um einen möglichst hohen Lichtstrom und damit eine möglichst hohe Leuchtdichte auf einem DMD-Chip zu erreichen. Das Ansteuersignal der Lichtquelle 1 ist mit Uₛ bezeichnet.

Die Ansteuerung 3 erhält ihrerseits wiederum Signale von der zentralen Recheneinheit 4, welcher Sensorsignale s1 ... si ... sn zugeführt werden können. Diese Signale können einerseits beispielsweise Schaltbefehle zum Umschalten von Fernlicht auf Abblendlicht sein oder andererseits Signale, die beispielsweise von Sensoren, wie Kameras, aufgenommen werden, welche die Beleuchtungsverhältnisse, Umweltbedingungen und/oder Objekte auf der Fahrbahn erfassen. Auch können die Signale von einer Fahrzeug-Fahrzeug-Kommunikationsinformation stammen. Die hier schematisch als Block gezeichnete Recheneinheit 4 kann vollständig oder teilweise in dem Scheinwerfer enthalten sein, wobei der Recheneinheit 4 auch eine Speichereinheit 5 zugeordnet ist.

Der Lichtquelle 1 kann eine Optik 6 nachgeordnet sein, deren Ausbildung unter anderem von der Art, Anzahl und der räumlichen Platzierung der verwendeten Leuchtmittel, wie Laserdioden oder LEDs sowie von der erforderlichen Strahlqualität abhängt, und welche vor allem dafür sorgen soll, dass das von der Lichtquelle abgegebene Licht homogen oder in einer davon abweichenden gewünschten Intensitätsverteilung auf die Mikrospiegel eines Mikrospiegelarrays 7 trifft.

Der fokussierte bzw. geformte Lichtstrahl 2 gelangt nun zu diesem Mikrospiegelarray 7, auf welchem durch entsprechende Stellung der einzelnen Mikrospiegel ein Leuchtbild 8 geformt wird, welches über eine Abbildungsoptik 9 als Lichtbild 10 auf eine Straße 11 projiziert werden kann. Die Recheneinheit 4 liefert Signale sₐ an eine Arrayansteuerung 12, welche die einzelnen Mikrospiegel des Arrays 7 in der dem gewünschten Lichtbild entsprechenden Weise ansteuert. Die einzelnen Mikrospiegel des Arrays 7 können hinsichtlich der Frequenz, der Phase und des Auslenkwinkels individuell angesteuert werden.

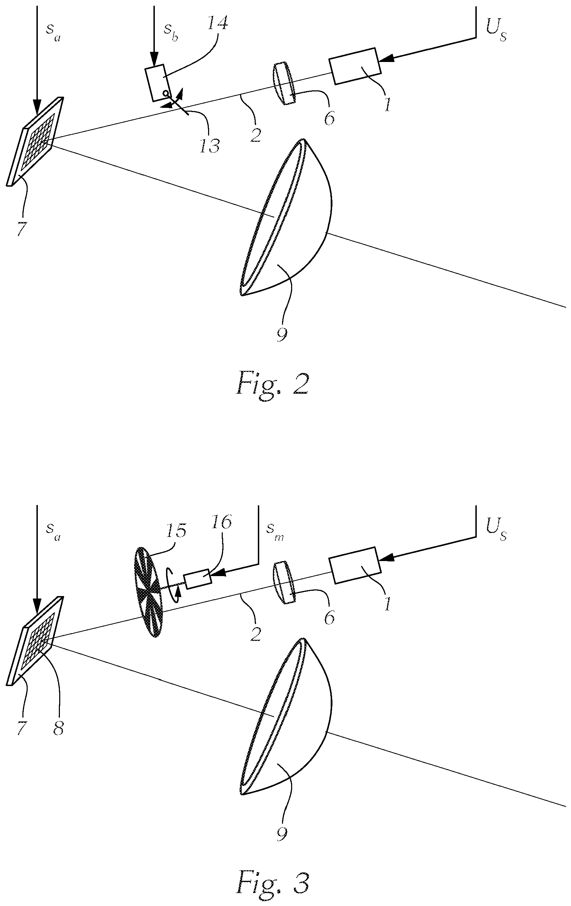

**Fig. 2** zeigt eine erste Ausführungsform der Erfindung, wobei für gleiche Teile gleiche Bezugszeichen verwendet werden und nicht die ganze Ansteuerung dargestellt ist, die prinzipiell jener nach Fig. 1 entspricht. Hier ist zwischen die Lichtquelle 1 und dem Array 7 eine verkippbare bzw. bewegliche Blende 13 geschaltet, die von einem geeigneten Antrieb 14, beispielsweise einem elektromagnetischen, so bewegt werden kann, dass sie je nach Aktivierung durch ein von der Recheneinheit geliefertes Signal s_{b} den Strahlengang zu dem Mikrospiegelarray 7 freigibt oder blockiert. Dieses Umschalten ist mit dem Umschaltverhalten des Mikrospiegelarrays 7 synchronisiert, was weiter unten erläutert wird.

**Fig. 3** zeigt eine andere Ausführungsform, deren Funktion jedoch ähnlich zu jener nach Fig. 2 ist und zu dem gleichen gewünschten Ergebnis führt. An Stelle der verkippbaren Blende der Fig. 2 ist hier eine rotierende Blende 15 im Strahlengang zu dem Mikrospiegelarray 7 angeordnet, welche von einem Motor 16 angetrieben ist. Dieser Motor 16 wird mit einem von der Recheneinheit geliefertes Signal sm versorgt, welches einen mit dem Umschaltverhalten des Mikrospiegelarrays 7 synchronisierten Lauf des Motors sicherstellt. Die rotierende Blende kann mehrere Felder enthalten, die lichtdurchlässig bzw. lichtblockierend sind.

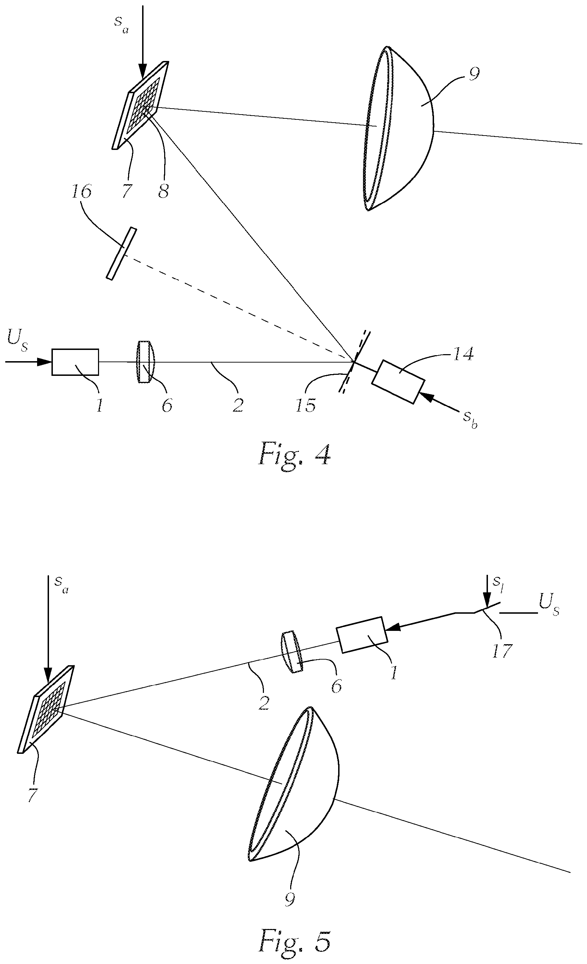

Eine weitere Variante ist in **Fig. 4** gezeigt, welche einen verschwenkbaren Spiegel 15 aufweist, der wie die Blende der Fig. 2 einen Antrieb 14 besitzt, welcher so bewegt werden kann, dass er je nach Aktivierung durch ein von der Recheneinheit geliefertes Signal s_{b} den Lichtstrahl 2 der Lichtquelle 1 zu dem zu dem Mikrospiegelarray 7 lenkt oder zu einem Absorber 16, der das von dem Array 7 ferngehaltene Licht absorbiert und damit auch unerwünschte Reflexionen im Scheinwerfer hintanhält.

Schließlich ist bei der Variante nach **Fig. 5** gezeigt, dass das zeitweise und synchronisierte Unterdrücken des auf das Mikrospiegelarray 7 gerichteten Lichtstrahls 2 auch durch einen gesteuerte Schalter 17 erfolgen kann, der von einem Signal sₗ angesteuert wird, welches ebenso wie die zuvor genannten Signale s_{b} und sₘ von der zentralen Recheneinheit 4 stammen und mit den Signalen sₐ für die Arrayansteuerung 12 in der weiter unten genau erläuterten Weise synchronisiert ist.

Bevor nachstehend die Funktion der Erfindung an einigen Beispielen beschrieben wird, sei angemerkt, dass hier Begriffe wie AUS-Phase, AUS-Zustand oder Licht-AUS im Zusammenhang mit der Stellung eines auf dem Mikrospiegelarray befindlichen Mikrospiegels bedeuten sollen, dass sich der jeweilige Mikrospiegel in einer Stellung befindet, in welcher der entsprechende Bereich/Pixel im Lichtbild ausgeblendet wird oder zumindest eine Beleuchtungsstärke unter 1 lx in diesem Bereich/Pixel bewirkt. Dazu im Gegensatz sollen Begriffe wie EIN-Phase usw. verstanden werden.

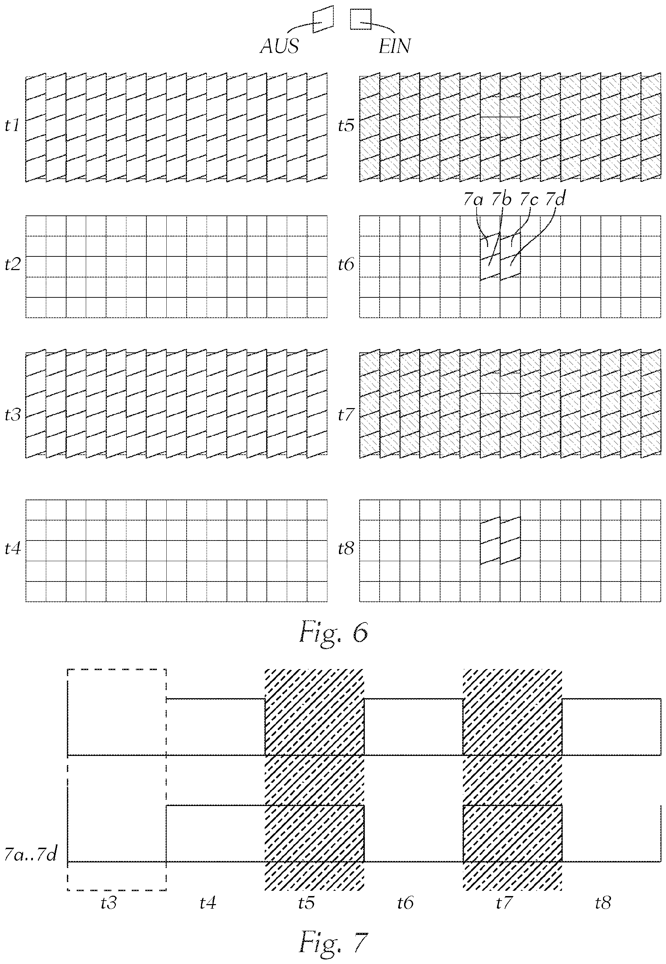

Das Unterdrücken des Lichtstrahls in einem Scheinwerfer nach der Erfindung wird nachstehend unter Bezugnahme auf **Fig. 6** in einem ersten Beispiel gezeigt.

Soll über den DMD-Chip ein Teil des Lichtbildes auf der Straße gebildet werden, welcher gleichmäßig beleuchtet ist, empfiehlt es sich die Mikrospiegel des Mikrospiegelarrays gleichzeitig von einer ersten Stellung zu einer zweiten zu bewegen, um einen gewünschten Duty Cycle zu realisieren.

Der Duty Cycle, das Tastverhältnis, muss nicht 50:50, somit 50%, sein, sondern kann abhängig von der maximal zu erwarteten Temperatur auch höher sein. Falls eine Kühlung bereitgestellt werden kann, welche die den Chip auf eine Temperatur unter 60°C kühlt, kann man beispielsweise den Duty Cycle sogar auf 70/30, somit 70%, erhöhen. Um einen hohen, steuerungsbedingten Aufwand zu vermeiden, wird der Duty Cycle in bevorzugter Weise von Anfang an, meist ab Werk, auf einen festen Wert eingestellt. Über einen DMD-Chip bildet man vorzugsweise einen Teil des Lichtbildes in der Mitte eines Fernlichtbildes, da in diesem Bereich eine hohe Auflösung erwünscht ist.

Nun näher auf Fig. 6 Bezug nehmend, zeigt diese schematisch ein zur besseren Lesbarkeit auf 5*15 = 75 Einzelspiegel reduziertes Array zu acht Zeitpunkten t1 bis t8 des Betriebes. Im Normalbetrieb, zu den Zeitpunkten t1 bis t4, werden, wie oben bereits beschrieben, alle Mikrospiegel gleichzeitig von der ersten Stellung zur zweiten bewegt, und zwar mit einem der Temperatur bzw. Kühlung angepassten Tastverhältnis. Zu den Zeitpunkten t1 und t3 stehen alle Einzelspiegel in der Stellung AUS, zu den Zeitpunkten t2 und t4 in der Stellung EIN.

Die schraffierte Fläche zeigt jene Zeitabschnitte t5, t7, zu welchen ein erfindungsgemäßes Unterdrücken des auf das Mikrospiegelarray gerichteten Lichtstrahls erfolgt.

Während des oben genannten Normalbetriebs ist es nicht notwendig den auf das Mikrospiegelarray gerichteten Lichtstrahl zu unterdrücken. Jedoch kann es auch während der AUS-Phasen vorteilhaft sein, den auf das Array gerichteten Lichtstrahl synchronisiert mit der Ansteuerfrequenz der Mikrospiegel des Mikrospiegelarrays zu unterdrücken, da damit eine Temperaturerhöhung an dem DMD-Chip aufgrund reflexionsbedingter Verluste vermieden werden kann. Unter "Ansteuerfrequenz" ist jene Frequenz zu verstehen, mit der die Mikrospiegel des Mikrospiegelarrays periodisch vom AUS-Zustand auf den EIN-Zustand wechseln.

Nun wird zusätzlich auf **Fig. 7** verwiesen: Wenn ein Ausblendszenario realisiert werden soll, das einen bestimmten Bereich im Lichtbild, z.B. ein entgegenkommendes Fahrzeug, betrifft, wobei gleichzeitig der Duty Cycle im Wesentlichen beibehalten werden soll, werden nun jene Mikrospiegel, in Fig. 6 zum Zeitpunkt t5 mit 7a bis 7d bezeichnet, die für den entsprechenden Bereich/Pixel im Lichtbild verantwortlich sind, in ihrer periodischen Schaltphase vom AUS-Zustand auf den EIN-Zustand um 180° verschoben (siehe Zeitpunkt t5). Man erkennt diese Phasenverschiebung in Fig. 7, in deren unteren Zeile der Betrieb während des Ausblendszenarios mit der genannten Phasenverschiebung dargestellt ist.

Damit bleiben jene Mikrospiegel des Mikrospiegelarrays, durch welche der auszublendende Bereich gebildet werden soll, das sind im dargestellten Beispiel die Mikrospiegel 7a bis 7d, in ihrem AUS-Zustand und die restlichen Mikrospiegel des Mikrospiegelarrays schalten auf den EIN-Zustand.

Nun wird im Sinne der vorliegenden Erfindung zusätzlich in dieser Zeitphase, in der sich die Stellungen der Mikrospiegel 7a bis 7d des Mikrospiegelarrays in ihrer periodischen Schaltphase um 180° verschieben, der auf das Mikrospiegelarray gerichtete Lichtstrahl unterdrückt. Damit kann ein bestimmter Duty Cycle beibehalten werden, obwohl ein Bereich im Lichtbild ausgeblendet werden soll.

Die Zeit, während welcher der auf das Mikrospiegelarray gerichtete Lichtstrahl unterdrückt werden soll, entspricht damit der Zeit, während der die Mikrospiegel des Mikrospiegelarrays, die für den auszublendenden Bereich "zuständig" sind, in einer Stellung verharren, z.B. die Zeit, während der ein Mikrospiegel im EIN-Zustand verbleibt. Diese Zeitdauer steht natürlich mit dem angewendeten Duty Cycle in Zusammenhang. Dies kommt einer mit der Ansteuerfrequenz der Mikrospiegel des Mikrospiegelarrays synchronen Unterdrückung des Lichtstrahls gleich.

Im Einsatz eines Scheinwerfers für Fahrzeuge bewegen sich die auszublendenden Objekte für gewöhnlich, womit im Laufe des Ausblendszenarios mehrere Mikrospiegel des Mikrospiegelarrays in ihrer Schaltphase, wie oben beschrieben, eine Verschiebung um 180° vornehmen müssen.

Sobald das Ausblendszenario vorbei ist, wird wieder in den Normalbetrieb geschaltet, was bedeutet, dass alle Mikrospiegel des Mikrospiegelarrays phasengleich von der ersten Stellung auf die zweite schalten.

Ein Scheinwerfer nach der Erfindung, wie oben beschrieben, kann auch dafür eingesetzt werden, ein Objekt gezielt zu beleuchten, wobei nicht beim EIN-Zustand der für das zu beleuchtende Objekt "zuständigen" Mikrospiegel - wobei es sich auch nur um einen einzigen Mikrospiegel handeln kann - des Mikrospiegelarrays ein Unterdrücken angewendet wird, sondern beim EIN-Zustand jener Mikrospiegel des Mikrospiegelarrays, die für Bereiche/Pixel außerhalb des zu beleuchtenden Objektes "zuständig" sind. Dieser Vorgang dürfte jedoch für einen Fachmann klar sein.

Im vorhergehenden Beispiel wurde gezeigt, wie man in einem gleichmäßig ausgeleuchteten Bereich einen Duty Cycle realisiert und dennoch ein Ausblendszenarium realisiert. Üblicherweise ist es allerdings wünschenswert, die Fahrbahn mit einem Lichtbild nicht gleichmäßig zu beleuchten, sondern ein für Fahrzeugscheinwerfer charakteristisches Lichtbild gemäß festgelegten Regeln zu erzeugen.

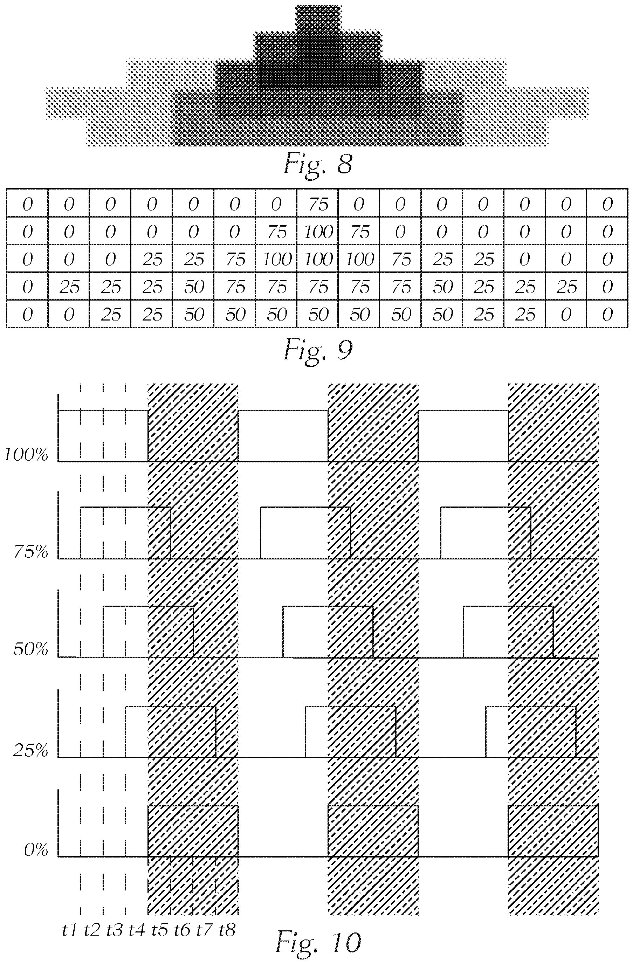

Dementsprechend soll im nächsten Beispiel eine besonders bevorzugte Anwendung einer erfindungsgemäßen Unterdrückung des Lichtstrahls gezeigt werden:
Im folgenden Beispiel wird unter Bezugnahme auf **Fig. 8** in diesem Sinn nun von einem stark vereinfachten Zusatzfernlichtbild ausgegangen, wobei diese Vereinfachung notwendig ist, um möglichst anschaulich die vorteilhafte Verwendung der Erfindung näher zu bringen. In der Praxis eingesetzte Mikrospiegelarrays bestehen aus mehreren Tausend Mikrospiegeln, womit eine grobe Abstufung, wie in Fig. 8 gezeigt, tatsächlich nicht der Praxis entspricht.

In dem Lichtbild der Fig. 8 werden weiters zur vereinfachten Darstellung nur 5 verschiedene Beleuchtungsstärken durch unterschiedliche Punktdichten dargestellt, wobei diese Beleuchtungsstärken in der auf Fig. 8 bezogenen **Fig. 9** in Prozent angegeben werden.

Dabei entsprechen 100% der maximal erbringbaren Beleuchtungsstärke. Wenn bei einem vorgegebenen Duty Cycle von 50/50 nur 50% der installierten Lichtleistung verwendet werden können, entsprechen diese jenen 100% in diesem Beispiel. 0% entsprechen einem nichtbeleuchteten Bereich/Pixel.

Wie oben beschrieben muss der Duty Cycle nicht 50/50 betragen sondern kann abhängig von der zu erwartenden DMD-Chip Temperatur auch höher gesetzt werden, wobei umso mehr Licht kann genutzt werden, je größer der Duty Cycle ist. Beispielsweise würde ein Duty Cycle von 70/30 eine theoretische Nutzung von 70% der installierten Lichtleistung bedeuten.

In **Fig. 10** werden fünf Diagramme gezeigt, wobei jeweils die Schaltzustände der Mikrospiegel des Mikrospiegelarrays gezeigt werden, welche für die in den Fig. 8 bzw. 9 angegebenen Beleuchtungsstärken von 0%, 25%, 50%, 75% und 100% verantwortlich sind. Die schraffierte Fläche zeigt jene Zeitabschnitte, in denen ein erfindungsgemäßes Unterdrücken des auf das Mikrospiegelarray gerichteten Lichtstrahls erfolgen soll.

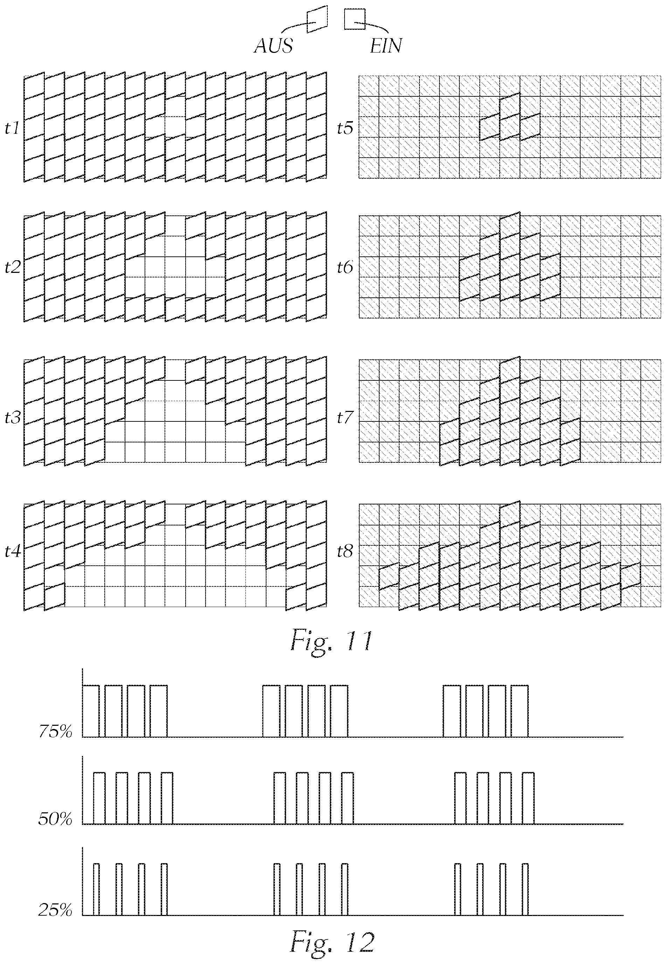

Zur weiteren Veranschaulichung sei auf **Fig. 11** verwiesen, in welcher sich die Zeitabschnitte t1, t2,... t8 auf die Diagramme der Fig. 10 beziehen (wobei zu beachten ist, dass diese Zeitabschnitte nichts mit jenen der Fig. 7 und des zugehörigen Beispiels zu tun haben). Es wird somit in Fig. 11 gezeigt, wie sich das Mikrospiegelarray im Normalbetrieb verhält, um das oben, in Fig. 8 und Fig. 9 gezeigte Lichtbild mit den unterschiedlichen Beleuchtungsstärken und einem Duty Cycle von 50/50 zu erreichen.

Rechts in Fig. 11 ist zu den Zeiten t5 bis t8 die Stellung der Mikrospiegel in jener Zeit gezeigt, zu der ein erfindungsgemäßes Unterdrücken des auf das Mikrospiegelarray gerichteten Lichtstrahls stattfindet.

Es ist gut zu erkennen, dass somit vorteilhaft auch ein ungleichmäßiges (oder strukturiertes) Lichtbild erzeugt und gleichzeitig auch ein bestimmter Duty Cycle für die einzelnen Mikrospiegel des Mikrospiegelarrays realisiert werden kann.

Jener Bereich, welcher mit 100% der erbringbaren Beleuchtungsstärke im Lichtbild beaufschlagt werden soll, ist in der Zeit von t1 bis t4 über die mittleren Mikrospiegel des Mikrospiegelarrays am längsten im EIN-Zustand. Mit "mittlere Mikrospiegel" sind jene Mikrospiegel des Mikrospiegelarrays gemeint, welche sich im Zeitraum t1 im EIN-Zustand befinden bzw. jene, die für die Bildung der 100% Bereiche des Lichtbildes "zuständig" sind (siehe z.B. Fig.9).

Hingegen sind jene Mikrospiegel, welche für den 75%-Bereich im Lichtbild "zuständig" sind, wie im Diagramm sowie in den dazugehörigen Figuren danach ersichtlich für ¾ (75%) der Zeit, nämlich zu den Zeitabschnitten t2 bis t4, im EIN-Zustand. ¼ (25%) fällt in jenen Zeitraum, in dem der auf das Mikrospiegelarray gerichtete Lichtstrahl unterdrückt wird.

Jene Bereiche, die im Lichtbild nicht beleuchtet werden sollen, also den 0% entsprechen, werden über die "zuständigen" Mikrospiegel des Mikrospiegelarrays so gebildet, dass in der Zeit, in der die Mikrospiegel des Mikrospiegelarrays mit dem Lichtstrahl beaufschlagt werden, sich diese im AUS-Zustand befinden und sie - sobald der notwendige Wechsel bedingt durch den Duty Cycle stattfindet - in den EIN-Zustand schalten. In dieser Zeit wird der Lichtstrahl unterdrückt und es kommt zu keiner Beleuchtung im Lichtbild und somit zur gewünschten Lichtverteilung.

Wie im vorhergehenden Beispiel beschrieben, müssen bei einem Ausblendszenario jene Mikrospiegel des Mikrospiegelarrays in ihrer Schaltphase verschoben werden, die für die auszublendenden Bereiche/Pixel "zuständig" sind.

Die Phasenverschiebung hängt dann von der im Normalbetrieb erwünschten Beleuchtungsstärke ab. Beispielsweise müssen jene Mikrospiegel des Mikrospiegelarrays, welche für die 75%-Bereiche zuständig sind, in ihrer Phase um 135° verschoben werden, um ihren EIN-Zustand in die lichtunterdrückte Phase zu verschieben. Die für 50%-Bereiche zuständigen um 90°, die für 25%-Bereiche zuständigen um 45° und die für 100%-Bereiche zuständigen um, wie bereits im vorhergehenden Beispiel beschrieben, 180°.

Die Mikrospiegel eines Mikrospiegelarrays ändern ihren Zustand von EIN auf AUS und umgekehrt mehrere tausend Mal in der Sekunde. Man steuert die Mikrospiegel bevorzugt mit hohen Frequenzen an, um lichtunterdrückte Phasen sowie Phasenverschiebungen einzelner Mikrospiegel für den Fahrer möglichst angenehm, d.h. nicht wahrnehmbar, zu gestalten. Ein Ansteuern der Mikrospiegel mit 200 Hz ist z.B. gebräuchlich, doch können höhere Frequenzen vorteilhafter sein, beispielsweise bevorzugt 500 Hz, besonders bevorzugt 1 kHz. Allerdings werden insbesondere wenn das Unterdrücken über ein Aus/Ein-Schalten der Lichtquelle realisiert wird, die Schaltzeiten deutlich kürzer und somit höhere Anforderungen an die Ansteuerelektronik gestellt.

Es ist auch möglich, die Lichtquelle zu dimmen, sodass das gesamte Lichtbild abgedimmt und hochgedimmt werden, was vor allem bei Umschaltphasen von einer Lichtfunktion auf eine andere gewünscht sein kann.

Eine weitere Möglichkeit individuell bestimmte Bereiche zu dimmen ist jene, die einzelnen Mikrospiegel des Mikrospiegelarrays in ihren EIN-Phasen pulsweitenmoduliert anzusteuern, was in **Fig. 12** für ein Abdimmen auf 75%, 50% und 25% gezeigt ist. Hierbei ist in einem Ausblendszenario bei jedem Mikrospiegel des Mikrospiegelarrays die gleiche Phasenverschiebung vorteilhaft, um in jenen Zeitbereich zu gelangen, in dem ein Unterdrücken des auf das Mikrospiegelarray gerichteten Lichtstrahls stattfindet. Dies kann steuerungsbedingte Aufwände bei Ausblendszenarien vermindern, beispielsweise gegenüber der Ausbildung nach Fig. 10, bei welcher unterschiedliche Phasenverschiebungen verwirklicht werden müssen, wogegen bei der Ausführung nach Fig. 12 für jeden Mikrospiegel die gleiche Phasenverschiebung von 180° bei einem Ausblendszenario ausreichend ist.

## Patentansprüche

1. Scheinwerfer für Fahrzeuge, mit zumindest einer Lichtquelle (1) samt einer Fokussieroptik (6), mit einem Mikrospiegelarray (7) und mit einer Abbildungsoptik (9), wobei der Lichtquelle und dem Mikrospiegelarray eine zentrale Recheneinheit (4) mit einer Lichtquellen-Ansteuerung (3) und einer Arrayansteuerung (12) zugeordnet ist,
die zentrale Recheneinheit mit der Arrayansteuerung dazu eingerichtet ist, die Stellung der Mikrospiegel periodisch mit einer vorgegebenen Ansteuerfrequenz und einem vorgegebenen Duty Cycle zwischen einem AUS-Zustand und einem EIN-Zustand umzuschalten und
der geformte Lichtstrahl (2) der zumindest einen Lichtquelle auf das Mikrospiegelarray gerichtet ist und das von diesem strukturierte, reflektierte Lichtbündel über die Abbildungsoptik (9) als Lichtbild (10) auf die die Straße (11) projiziert wird,
**dadurch gekennzeichnet, dass**
die Recheneinheit (4) mit der Lichtquellen-Ansteuerung (3) und der Arrayansteuerung (12) dazu eingerichtet ist, den fokussierten, auf das Mikrospiegelarray (7) gerichteten Lichtstrahl (2) synchronisiert mit der Ansteuerfrequenz des Mikrospiegelarrays zu vorgebbaren Zeiten zu unterdrücken und
zum Erzeugen eines ausgeblendeten Bereichs des Lichtbilds im Falle eines Ausblendszenarios in einem Bereich des Mikrospiegelarrays die Mikrospiegel in ihrer periodischen Schaltphase um 180° vom AUS-Zustand auf den EIN-Zustand zu verschieben sowie den fokussierten, auf das Mikrospiegelarray (7) gerichteten Lichtstrahl (2) synchronisiert mit der Ansteuerfrequenz des Mikrospiegelarrays zu jenen Zeiten zu unterdrücken, zu welchen die Mikrospiegel auf den EIN-Zustand verschoben wurden.

2. Scheinwerfer nach Anspruch 1, **dadurch gekennzeichnet, dass** die Recheneinheit (4) mit der Lichtquellen-Ansteuerung (3) und der Arrayansteuerung (12) dazu eingerichtet ist, den auf das Array gerichteten Lichtstrahl synchronisiert mit der Ansteuerfrequenz der Mikrospiegel während der AUS-Phasen zu unterdrücken.

3. Scheinwerfer nach Anspruch 1, **dadurch gekennzeichnet, dass** zum gezielten Beleuchten eines Bereichs der Fahrbahn/des Lichtbilds, die Recheneinheit (4) mit der Lichtquellen-Ansteuerung (3) und der Arrayansteuerung (12) dazu eingerichtet ist, während des EIN-Zustandes aller Mikrospiegel, die für alle Bereiche außerhalb des gezielt zu beleuchtenden Bereichs verantwortlich sind, den auf das Array gerichteten Lichtstrahl synchronisiert mit der Ansteuerfrequenz der Mikrospiegel während der AUS-Zustände zu unterdrücken.

4. Scheinwerfer nach Anspruch 1, **dadurch gekennzeichnet, dass** zum Erzeugen eines strukturierten Lichtbilds mit unterschiedlichen Beleuchtungsstärken die Recheneinheit (4) mit der Lichtquellen-Ansteuerung (3) und der Arrayansteuerung (12) dazu eingerichtet ist, die EIN-Zustände von Mikrospiegeln um bestimmte Zeiten t1...t4 in der Phase zu verschieben und den auf das Array gerichteten Lichtstrahl synchronisiert mit der Ansteuerfrequenz der Mikrospiegel der AUS-Zustände zu unterdrücken, wobei je nach Phasenverschiebung zumindest ein zeitlicher Teilbereich der EIN-Zustände in den Unterdrückungszeitraum fällt.

5. Scheinwerfer nach einem der Ansprüche 1 bis 4, **dadurch gekennzeichnet, dass** im Strahlengang zwischen der Lichtquelle (1) und dem Mikrospiegelarray (7) ein verschwenkbarer Spiegel (15) vorgesehen ist, der einen Antrieb (14) besitzt, welcher je nach Aktivierung durch ein von der Recheneinheit (4) geliefertes mit dem Umschaltverhalten des Mikrospiegelarrays synchronisiertes, Signal (s_{b}) so bewegt werden kann, dass er je nach Aktivierung den Lichtstrahl (2) der Lichtquelle (1) zu dem Mikrospiegelarray lenkt oder von diesem weg, bevorzugt zu einem Absorber (16).

6. Scheinwerfer nach einem der Ansprüche 1 bis 4, **dadurch gekennzeichnet, dass** im den Strahlengang zwischen Lichtquelle (1) und Mikrospiegelarray (7) eine bewegliche, von einem Antrieb (14) bewegbare Blende (13) geschaltet ist, die je nach Aktivierung durch ein mit dem Umschaltverhalten des Mikrospiegelarrays (7) synchronisiertes Signal (s_{b}) der Recheneinheit (4) den Strahlengang zu dem Mikrospiegelarray freigibt oder blockiert.

7. Scheinwerfer nach einem der Anspruch 6, **dadurch gekennzeichnet, dass** die bewegliche Blende als rotierende Blende (15) ausgebildet ist, welche von einem Motor (16) angetrieben ist, der von einem von der Recheneinheit (4) gelieferten, mit dem Umschaltverhalten des Mikrospiegelarrays (7) synchronisierten Signal (sₘ) gesteuert ist.

8. Scheinwerfer nach einem der Ansprüche 1 bis 4, **dadurch gekennzeichnet, dass** zum zeitweisen und synchronisierten Unterdrücken des auf das Mikrospiegelarray (7) gerichteten Lichtstrahls (2) ein von der Recheneinheit (4) gesteuertes und mit dem Umschaltverhalten des Mikrospiegelarrays synchronisiertes EIN/AUS-Schalten der Lichtquelle (1) vorgesehen ist.

## Claims

1. A headlight for vehicles, comprising at least one light source (1) together with a focusing optical unit (6), a micromirror array (7), and an imaging optical unit (9), a central processing unit (4) comprising a light source control unit (3) and an array control unit (12) being associated with the light source and the micromirror array,
the central processing unit, together with the array control unit, being configured to switch the position of the micromirrors between an OFF state and an ON state periodically using a predefined control frequency and a predefined duty cycle, and
the formed light ray (2) from the at least one light source being directed at the micromirror array, and the light beam structured and reflected thereby being projected onto the road (11) as a light pattern (10) by way of the imaging optical unit (9),
**characterized in that**
the processing unit (4), together with the light source control unit (3) and the array control unit (12), is configured to suppress the focused light ray (2) directed at the micromirror array (7) at predefinable times and synchronously with the control frequency of the micromirror array and,
in order to generate a masked region of the light pattern in a masking scenario in a region of the micromirror array, to shift the micromirrors in their periodic switching phase by 180° from the OFF state to the ON state, and
to suppress the focused light ray (2) directed at the micromirror array (7) at those times at which the micromirrors have been shifted to the ON state and synchronously with the control frequency of the micromirror array.

2. The headlight according to claim 1, **characterized in that** the processing unit (4), together with the light source control unit (3) and the array control unit (12), is configured to suppress the light ray directed at the array synchronously with the control frequency of the micromirrors during the OFF phases.

3. The headlight according to claim 1, **characterized in that**, in order to specifically illuminate a region of the roadway/of the light pattern, the processing unit (4), together with the light source control unit (3) and the array control unit (12), is configured, during the ON state of all micromirrors responsible for all regions outside the region that is to be specifically illuminated, to suppress the light ray directed at the array synchronously with the control frequency of the micromirrors during the OFF states.

4. The headlight according to claim 1, **characterized in that**, in order to generate a structured light pattern having different illuminances, the processing unit (4), together with the light source control unit (3) and the array control unit (12), is configured to phase-shift the ON states of micromirrors by certain times t1 ... t4 and to suppress the light ray directed at the micromirror array synchronously with the control frequency of the micromirrors of the OFF states, wherein, depending on the phase shift, at least one temporal portion of the ON states falls within a suppression period.

5. The headlight according to any one of claims 1 to 4, **characterized in that** a pivotable mirror (15) is provided in the beam path between the light source (1) and the micromirror array (7), the pivotable mirror having a drive (14) that, depending on activation by a signal (s_{b}) supplied by the processing unit (4) and synchronized with the switching behavior of the micromirror array, can be moved so as to guide the light ray (2) of the light source (1) towards the micromirror array or away therefrom, preferably to an absorber (16), depending on the activation.

6. The headlight according to any one of claims 1 to 4, **characterized in that** a movable diaphragm (13) movable by a drive (14) is arranged in the beam path between the light source (1) and the micromirror array (7), the movable diaphragm releasing or blocking the beam path to the micromirror array depending on activation by a signal (s_{b}) of the processing unit (4) synchronized with the switching behavior of the micromirror array (7).

7. The headlight according to claim 6, **characterized in that** the movable diaphragm is designed as a rotating diaphragm (15), which is driven by a motor (16) controlled by a signal (sₘ) that is supplied by the processing unit (4) and synchronized with the switching behavior of the micromirror array (7).

8. The headlight according to any one of claims 1 to 4, **characterized in that** an ON/OFF switching of the light source (1), which is controlled by the processing unit (4) and synchronized with the switching behavior of the micromirror array, is provided for the intermittent and synchronized suppression of the light ray (2) directed at the micromirror array (7).

## Revendications

1. Phare pour véhicules, comportant au moins une source de lumière (1) associée à une optique de focalisation (6), comportant une matrice de micro-miroirs (7) et comportant une optique de reproduction (9), dans lequel une unité centrale de calcul (4) pourvue d'une commande de source de lumière (3) et d'une commande de matrice (12) est associée à la source de lumière et à la matrice de micro-miroirs,
l'unité centrale de calcul pourvue de la commande de matrice est adaptée pour commuter la position des micro-miroirs périodiquement avec une fréquence de commande prédéterminée et un rapport cyclique prédéterminé entre un état ARRET et un état MARCHE et
le faisceau de lumière (2) mis en forme de ladite au moins une source de lumière est orienté sur la matrice de micro-miroirs et le faisceau de lumière réfléchi, structuré par celle-ci, est projeté sur la route (11) sous la forme d'une image lumineuse (10) par le biais de l'optique de reproduction (9),
**caractérisé par le fait que**
l'unité de calcul (4) pourvue de la commande de source de lumière (3) et de la commande de matrice (12) est adaptée pour supprimer le faisceau de lumière (2) focalisé, dirigé sur la matrice de micro-miroirs (7), de façon synchronisée avec la fréquence de commande de la matrice de micro-miroirs à des instants prédéterminables, et
pour la génération d'une région masquée de l'image lumineuse dans le cas d'un scénario de masquage dans une région de la matrice de micro-miroirs, pour déplacer les micro-miroirs dans leur phase de commutation périodique de 180° de l'état ARRET à l'état MARCHE, ainsi que pour supprimer le faisceau de lumière (2) focalisé, dirigé sur la matrice de micro-miroirs (7), de façon synchronisée avec la fréquence de commande de la matrice de micro-miroirs aux instants auxquels les micro-miroirs ont été déplacés sur l'état MARCHE.

2. Phare selon la revendication 1, **caractérisé par le fait que** l'unité de calcul (4) pourvue de la commande de source de lumière (3) et de la commande de réseau (12) est adaptée pour supprimer le faisceau de lumière dirigé sur la matrice de façon synchronisée avec la fréquence de commande des micro-miroirs pendant les phases ARRET.

3. Phare selon la revendication 1, **caractérisé par le fait qu'**afin d'éclairer de façon sélective une région de la chaussée/de l'image lumineuse, l'unité de calcul (4) pourvue de la commande de source de lumière (3) et de la commande de réseau (12) est adaptée pour, durant l'état MARCHE de tous les micro-miroirs, qui sont responsables pour toutes les régions à l'extérieur de la région à éclairer de façon sélective, supprimer le faisceau de lumière dirigé sur la matrice de façon synchronisée avec la fréquence de commande des micro-miroirs durant les états ARRET.

4. Phare selon la revendication 1, **caractérisé par le fait que,** pour la génération d'une image lumineuse structurée avec des intensités d'éclairage différentes, l'unité de calcul (4) pourvue de la commande de source de lumière (3) et de la commande de réseau (12) est adaptée pour déphaser les états MARCHE des micro-miroirs d'instants déterminés t1... t4 et pour supprimer le faisceau de lumière dirigé sur la matrice de façon synchronisée avec la fréquence de commande des micro-miroirs des états ARRET, dans lequel, à chaque fois selon le décalage de phase, au moins une région partielle temporelle des états MARCHE tombe dans la période de temps de suppression.

5. Phare selon l'une des revendications 1 à 4, **caractérisé par le fait que,** dans le trajet de faisceau entre la source de lumière (1) et la matrice de micro-miroirs (7), est disposé un miroir pivotant (15) qui possède une commande (14), laquelle, à chaque fois selon l'activation par un signal (s_{b}) délivré par l'unité de calcul (4) et synchronisé avec le comportement de commutation de la matrice de micro-miroirs, peut être déplacée de telle sorte qu'à chaque fois selon l'activation, elle dirige le faisceau de lumière (2) de la source de lumière (1) sur la matrice de micro-miroirs ou à l'opposé de celle-ci, de préférence sur un absorbeur (16).

6. Phare selon l'une des revendications 1 à 4, **caractérisé par le fait que,** dans le trajet de faisceau entre la source de lumière (1) et la matrice de micro-miroirs (7), un diaphragme mobile (13), déplaçable par une commande (14), est monté, qui à chaque fois selon l'activation par un signal (s_{b}) de l'unité de calcul (4) synchronisé avec le comportement de commutation du réseau de micro-miroirs (7) libère ou bloque le trajet de faisceau à la matrice de micro-miroirs.

7. Phare selon la revendication 6, **caractérisé par le fait que** le diaphragme mobile est formé en tant que diaphragme rotatif (15), lequel est entraîné par un moteur (16), qui est commandé par un signal (sₘ) délivré par l'unité de calcul (4) et synchronisé avec le comportement de commutation de la matrice de micro-miroirs (7).

8. Phare selon l'une des revendications 1 à 4, **caractérisé par le fait que,** pour la suppression temporaire et synchronisée du faisceau de lumière (2) dirigé sur la matrice de micro-miroirs (7), est prévue une commutation MARCHE/ARRET de la source de lumière (1) commandée par l'unité de calcul (4) et synchronisée avec le comportement de commutation du réseau de micro-miroirs.
